# EUROPÄISCHE PATENTSCHRIFT

(11) **EP 0 474 265 B1**
(45) Veröffentlichungstag und Bekanntmachung des Hinweises auf die Patenterteilung: **22.03.1995**
(21) Anmeldenummer: 91118711.0
(22) Anmeldetag: 26.03.1988
(51) Int. Cl.: C01B 33/107, B01J 31/02

(54) **Verfahren zur Herstellung von Dichlorsilan**
Method for preparation of dichlorosilane
Procédé de préparation de dichlorosilane

(30) Priorität: 04.04.1987 DE 3711444
(43) Veröffentlichungstag der Anmeldung: 11.03.1992
(62) Teilanmeldung aus: 88104895.3
(73) Patentinhaber: HÜLS AKTIENGESELLSCHAFT, 45764 Marl (DE)
(72) Erfinder: Matthes, Reinhard, Dr., W-7888 Rheinfelden (DE); Schork, Reinhold, Dr., W-7888 Rheinfelden (DE); Vahlensieck, Hans-Joachim, Dr., W-7867 Wehr (DE)

(56) Entgegenhaltungen:
- DE-B- 2 162 537
- US-A- 4 613 491
- CHEMICAL ABSTRACTS, Band 106, Nr. 2, 12. Januar 1987, Seite 119, Zusammenfassung Nr. 7106e, Columbus, Ohio, US; & JP-A-61 174 109
- CHEMICAL ABSTRACTS, Band 106, Nr. 24, 25. Juni 1987, Seite 138, Zusammenfassung Nr. 198713h, Columbus, Ohio, US; & JP-A-61 232 214

## Beschreibung

Dichlorsilan kann aus FeSi und HCl nur in geringer Ausbeute und durch hohen Destillationsaufwand zur Abtrennung zahlreicher Nebenprodukte hergestellt werden.
Üblich ist daher die Disproportionierung von Trichlorsilan an geeigneten Katalysatoren zu Dichlorsilan unter Abtrennung von Siliciumtetrachlorid. Hierbei handelt es sich um eine Gleichgewichtsreaktion, deren Gleichgewicht sich nur langsam einstellt. Die Mehrzahl der verwendeten Katalysatoren sind sekundäre und tertiäre Amine oder quartäre Ammoniumsalze (vgl. DE-AS 21 62 537). Dabei werden, um die Einstellung des Gleichgewichts zu beschleunigen und nicht zu lange Verweilzeiten am Katalysatorbett und im Reaktor zu erreichen, hohe Temperaturen und hohe Drücke angewendet. Unter Druck besteht aber ein hohes Risiko, weil Dichlorsilan und ggf. gebildete Anteile von H₃SiCl bzw. SiH₄ selbstentzündlich sind und bei Leckage zu außerordentlich heftigen Reaktionen führen. In Durchflußreaktoren ist der Anteil von umgesetztem Trichlorsilan sehr hoch. Das Trichlorsilan muß mehrfach unter hohem Energieaufwand redestilliert werden, bevor schließlich eine vollständige Umsetzung erreicht ist.

Aus der US-A-4613 491 ist bekannt, Trichlorsilan an Trägerkatalysatoren zu disproportionieren, die Alkylaminoalkylsilylgruppen aufweisen. Dabei kann die Aminogruppe als tertiäres Amin oder als quartäre Ammoniumgruppe vorliegen.
Aus Chemical Abstracts, 106, Nr. 24, Seite 138, Nr. 198713 h, JP-A-61 232 214 ist ein Trägerkatalysator zur Disproportionierung von Trichlorsilan bekannt, der Trialkylsilyl-Ammonium-Gruppen aufweist. Zur Herstellung dieses Katalysators wird (Triethoxysilyl-Propyl-) Amin eingesetzt.

Es bestand daher die Aufgabe, den hohen Aufwand für Energie zu senken und besonders den Aufwand für Destillation von umgesetztem Trichlorsilan zu vermindern.
Weiterhin bestand die Aufgabe, eine rasche Einstellung des Gleichgewichts der Disproportionierung zu erreichen und gebildetes Dichlorsilan sofort nach der Bildung zu entfernen. Eine weitere Aufgabe bestand darin, den Aufwand für die Vorrichtung zu senken.

Gegenstand der gleichzeitigen Europäischen Patentanmeldung 88 104 895.3 (Veröffentlichungs-Nummer 0 285 937) ist ein Verfahren zur Herstellung von Dichlorsilan durch
Disproportionierung von Trichlorsilan an einem Katalysatorfestbett, dadurch gekennzeichnet, daß bei Reaktortemperaturen zwischen 10°C und dem Siedepunkt des Reaktionsgemisches gasförmig Dichlorsilan dem Reaktor entnommen und gewonnen wird, wobei Anteile von Trichlorsilan kondensiert und in den Reaktor zurückgeführt werden und die flüssige Reaktionsphase teilweise dem Reaktor entnommen und in Tetrachlorsilan und in den Reaktor zurückgeführtes Trichlorsilan getrennt wird.
Normaldruck ist bei der Reaktion entschieden bevorzugt. Der Druck kann jedoch auch zwischen 0,8 und 1,2 bar liegen.
Weiterer Gegenstand dieser Patentanmeldung 88 104 895.3 ist eine Vorrichtung zur Durchführung dieses Verfahrens, welches im wesentlichen aus einem Reaktor und einer mit diesem verbundenen danebenstehenden Destillationskolonne besteht.
Wesentliches Merkmal des Verfahrens ist eine siedende Reaktionslösung und Ableitung von Dichlorsilan als Gas direkt nach seiner Bildung in eine Destillationsanlage, wobei im Gas Trichlorsilan nur in geringen Anteilen enthalten ist, welche der Temperatur bei der Reaktion entsprechen.
Die Temperatur im Reaktor soll den Siedepunkt des Reaktionsgemisches nicht überschreiten, d.h. höchstens 40 bis 50°C erreichen.
Die flüssige Reaktionsphase wird vorzugsweise dem Reaktor nur in dem Maß entnommen, wie das durch Disproportionierung entstehende Tetrachlorsilan abgetrennt werden muß, was durch Destillation und Rückführung des Trichlorsilans und Abtrennung von reinem Tetrachlorsilan aus der Destillationsblase der Kolonne geschieht. Sehr bevorzugt wird nur die Menge frisches Trichlorsilan zugeführt, die verbraucht wird. In der sehr bevorzugten Ausführungsform des Verfahrens und in sehr bevorzugter Ausbildung der Vorrichtung gibt es nur eine Destillationskolonne, in der am Kolonnenkopf reines Dichlorsilan entnommen wird, aus deren Sumpf Tetrachlorsilan entnommen wird und in der kondensiertes Trichlorsilan in mittlerer Höhe über eine Abtauchung entnehmbar und in den unteren Teil des Reaktors zurückgeführt wird. In dieser Kolonne befinden sich in geeignetem Abstand zueinander in mittlerer Höhe übereinander die Zuführung von flüssigem Reaktorinhalt aus Trichlorsilan und Tetrachlorsilan, die Abführung von kondensiertem Trichlorsilan und die Zuführung der Gase aus Dichlorsilan und Anteilen von Trichlorsilan.
Vorzugsweise ist der Reaktor mit einem Überlauf für die Reaktorflüssigkeit versehen, wodurch im oberen Teil des Reaktors ein nicht beheizter Gasraum besteht, in dem bereits ein Teil des Trichlorsilans kondensiert.
Die Heizung des Reaktors kann durch einen Heizmantel erfolgen. Der Reaktor ist oberhalb einer Siebplatte bis zum Flüssigkeitsspiegel mit Formkörpern, vorzugsweise Kugeln, des Festbettkatalysators gefüllt.

Gegenstand der vorliegenden Erfindung ist ein Verfahren zur Herstellung von Dichlorsilan durch Disproportionierung von Trichlorsilan an einem Katalysatorbett, dadurch gekennzeichnet, daß bei Reaktortemperaturen zwischen 10 °C und dem Siedepunkt des Reaktionsgemisches und einem Druck von 0,8 bis 1,2 bar gasförmig Dichlorsilan dem Reaktor entnommen wird, wobei Anteile von Trichlorsilan kondensiert und in den Reaktor zurückgeführt werden und die flüssige Reaktionsphase teilweise dem Reaktor entnommen und in den Reaktor zurückgeführtes Trichlorsilan getrennt wird und als Katalysatormasse auf einem Trägermaterial chemisch gebundenes Alkyl-trialkoxysilan eingesetzt wird.

Dieses Verfahren der vorliegenden Erfindung ist, abgesehen von dem Katalysator, in derselben Weise ausgebildet wie das Verfahren der Europäischen Patentanmeldung 88 104 895.3.

Das Trägermaterial des Katalysators kann an sich beliebig sein, besteht jedoch vorzugsweise aus SiO₂, welches aus gefälltem SiO₂ durch Formgebung und Trocknung hergestellt wurde.

Vorzugsweise hat der Katalysatorträger eine Oberfläche von 150 bis 250 m²/cm³. Auf dem Katalysatorträger wird vorzugsweise ein Alkylamino-trialkoxysilan durch Kondensation in Gegenwart von Wasser chemisch gebunden, worauf der hergestellte Katalysator sorgfältig getrocknet wird. Bevorzugt sind Alkylamino-trialkoxysilane mit 1 bis 20 C-Atomen in der Alkylaminogruppe und 1 bis 4 C-Atomen, die von Sauerstoff unterbrochen sein können, in der Alkoxy-Gruppe. In der Alkylamino-Gruppe sind tertiäre Amine mit 1 bis 3 C-Atomen in der Alkylen-Gruppe und 1 bis 10 C-Atomen in der Alkyl-Gruppe bevorzugt.

Weiterer Gegenstand der Erfindung ist daher ein Trägerkatalysator, der eine Katalysatormasse der allgemeinen Formel

(CₓH₂ₓ₊₁O)₃ Si(CH₂)_{z}N(C_{y}H_{2y+1})₂

aufweist, wobei x = 1 bis 4; y = 1 bis 10; z = 1 bis 3 bedeuten.

Dieser Katalysator kann allgemein für beliebige Verfahren der Disproportionierung von TCS in flüssiger oder gasförmiger Phase und unabhängig von der Art der Vorrichtung verwendet werden.

Diese Katalysatoren bewirken eine sehr starke Beschleunigung der Disproportionierung, besonders auch bei niedrigen Temperaturen.
Aus der gesamten Apparatur sind Spuren von Feuchtigkeit vor der Reaktion sorgfältig zu entfernen und während der Reaktion der Zutritt von Feuchtigkeit durch Verwendung von z.B. Stickstoff als Schutzgas zu vermeiden.

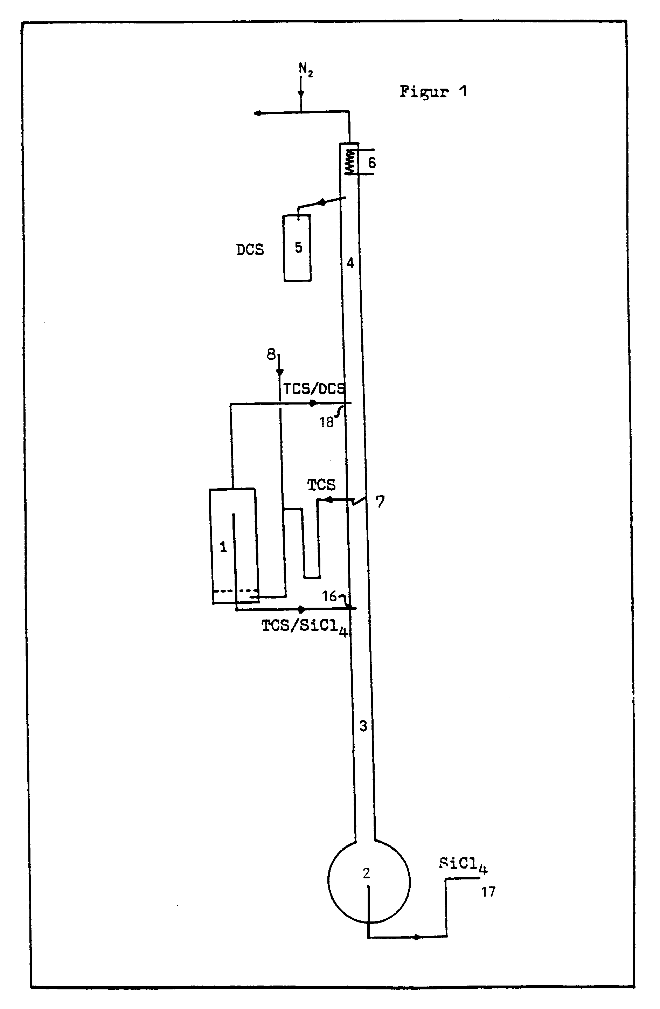

Das Verfahren wird vorzugsweise mit einer Vorrichtung ausgeführt, in welcher die Destillationskolonne mit Abnahme von Dichlorsilan am Kolonnenkopf und Kondensation von Trichlorsilan mit der Destillationskolonne zur Destillation von Trichlorsilan und Abführung von Tetrachlorsilan aus der Destillationsblase zu einer einzigen Destillationskolonne übereinanderstehend vereint sind, welche mit der Zuführung für Gase oberhalb der Abnahme von Trichlorsilan und der Zuführung von flüssigem Reaktorinhalt unterhalb der Abnahme von Trichlorsilan mit dem Reaktor verbunden und zu einer Einheit integriert ist.
Diese Vorrichtung ist nicht Gegenstand der hier vorliegenden Erfindung. Bevorzugt wird eine Vorrichtung verwendet, bestehend aus einem Festbettreaktor und einer mit diesem verbundenen danebenstehenden Destillationskolonne, derart, daß die Zuführung von Gasen aus dem Reaktor in die Destillationskolonne über der Abführung von Trichlorsilan, welches in den Reaktor zurückgeführt wird, und diese über der Zuführung von aus dem Reaktor kommender Reaktorflüssigkeit in die Destillationskolonne angeordnet ist und Dichlorsilan mit einem Kondensator am Kolonnenkopf und Tetrachlorsilan aus dem Sumpf der Destillationsblase entnommen wird.
In der Zeichnung der Figur 1 ist die vorzugsweise für die Durchführung des Verfahrens benutzte Vorrichtung dargestellt. Die Zeichnung zeigt nebeneinanderstehend den Reaktor 1 mit Festbett und Überlauf für den flüssigen Reaktorinhalt, Zuführung für frisches und destilliertes Trichlorsilan in den Reaktor sowie Abführung für gasförmige Reaktionsprodukte in Zuordnung zu der nebenstehenden Destillationskolonne 14 mit Kondensator 6 und Produktvorlage 5 für Dichlorsilan (DCS), Verstärkerteil 4 für die Destillation des Dichlorsilans und Kondensation des Trichlorsilans, Abtriebsteil 3 zur Destillation von Trichlorsilan und Destillationsblase 2 zur Sammlung und Abführung von reinem Tetrachlorsilan durch den Überlauf 17, wobei die Zuführung 18 der Gase (DCS mit Anteilen von Trichlorsilan) aus dem Reaktor, die Abführung von flüssigem Trichlorsilan durch die Abtauchung 7 und die Zuführung 16 von flüssigem Trichlorsilan mit Anteilen von Tetrachlorsilan (TSC/SiCl₄) im mittleren Teil der Destillationskolonne untereinander angeordnet sind. Der Inhalt der Destillationsblase wird vorzugsweise auf Siedetemperatur (56°C) gehalten.
Durch Temperaturkontrolle wird der Destillationsverlauf verfolgt. Störungsfreier kontinuierlicher Betrieb stellt sich sein, wenn direkt oberhalb des Einlaufs der flüssigen Reaktionsmischung aus dem Reaktor die Kolonnentemperatur 32°C nicht oder nur geringfügig übersteigt. Vorzugsweise ist die Destillationskolonne mit Füllkörpern gefüllt. Frisches Trichlorsilan wird über die Leitung 8 zugegeben und tritt bei 12 zusammen mit zurückgeführtem TCS in den Reaktor ein.
Der Reaktor ist oberhalb der Siebplatte 9 mit dem Katalysatorfüllkörper 10 bis zur Höhe des Überlaufs 11 gefüllt.
Die Kolonne ist mit Füllkörpern 15 gefüllt.
Als Katalysatoren können beliebige für die Disproportionierung von TCS bekannte Katalysatoren, z.B. SiO₂, Alkoxysilane o.dgl. verwendet werden, jedoch haben diese geringere Wirkung als der erfindungsgemäße Katalysator.

### Beispiel 1

Als Katalysator wurde ein Alkylamino-trialkoxysilan der allgemeinen Formel

(CH₃CH₂O)₃ Si (CH₂)₃ N (Octyl)₂

eingesetzt, welches in Gegenwart von wasserhaltigem Ethanol auf kugelförmigem SiO₂-Trägermaterial fixiert und im Vakuum getrocknet wurde.
6,2 g Aminosilan/100 g Katalysatormasse wurden so immobilisiert.

Unter Stickstoffatmosphäre wurde die Katalysatormasse in den Reaktor eingebracht, ebenso die Destillationskolonne mit N₂ gespült. Dann wurde SiCl₄ in die Destillationsblase eingefüllt und bis zum Sieden erhitzt. Nachdem am Kolonnenkopf Rückfluß einsetzte, wurde der Reaktor langsam mit Trichlorsilan beaufschlagt, wobei die Disproportionierungsreaktion einsetzte, der Reaktor wurde so beheizt, daß die Reaktorfüllung siedete. Durch das entstehende gasförmige Dichlorsilan und das in flüssiger Phase in die Kolonne fließende Trichlorsilan begann auch die Destillationskolonne zu arbeiten, die Temperaturen am Kolonnenkopf und in der Kolonnenmitte fielen, wobei die automatische Kolonnenkopfsteuerung dafür sorgte, daß nur reines Dichlorsilan in die Vorlage gelangte.
Gleichzeitig entstandenes SiCl₄ wurde durch einen kontinuierlichen Überlauf am Sumpf abgezogen. Auf diese Weise wurden pro Stunde und 100 g Katalysatormasse aus 32,3 g (=0,24 Mol) TCS 21,6 g (= 0,13 Mol) SiCl₄ und 11,2 g (=0,11 Mol) DCS erhalten (GC-Reinheit: 97,5% DCS, 1,7% H₃SiCl, 0,8% TCS).

Dieses Ergebnis ist dem Resultat bei einfachem Reaktordurchlauf mit nachfolgender Redestillation gegenüberzustellen:
Die gleiche Menge DCS je 100 g gleichartiger Katalysatormasse wurde erhalten, wenn 128 g (0,95 Mol) TCS das entsprechende Reaktorvolumen durchflossen.
Dies entspricht der vierfachen Menge TCS, wovon 3/4 ungenutzt redestilliert werden mußte.

### Beispiel 2

Im folgenden Beispiel wurde Katalysatormasse eingesetzt, die durch Hydrolyse von Alkylamino-trialkoxysilan der Formel

(CH₃O)₃Si (CH₂)₃N (C₂H₅)₂

in Gegenwart von Wasser unter Abspaltung von Methanol mit nachfolgender sorgfältiger Trocknung im Vakuum erhalten wurde.
Die Verfahrensweise von Beispiel 1 wird wiederholt.

Die Versuche an diesem Katalysator wurden in der beschriebenen Apparatur bei verschiedenen Reaktorheiztemperaturen durchgeführt.
Die Ergebnisse sind tabellarisch dargestellt (alle Angaben sind bezogen auf 100g Katalysatormasse):

| Heiztemperatur °C | Einsatz TCS g/h | erhaltenes DCS g/h | SiCl₄ g/h |
|---|---|---|---|
| 25 | 42,0 | 14,2 | 25,5 |
| 35 | 76,7 | 26,1 | 49,1 |
| 45 | 109,9 | 34,9 | 60,1 |
| 50 | 101,8 | 35,7 | 61,6. |

In entsprechender Weise kann als Katalysator auch (CH₃O)₃ Si (CH₂)₂ N (C₄H₉)₂ auf dem Träger aus SiO₂ oder Keramik fixiert verwendet werden.

## Patentansprüche

1. Verfahren zur Herstellung von Dichlorsilan durch Disproportionierung von Trichlorsilan an einem Katalysatorfestbett, **dadurch gekennzeichnet**, daß bei Reaktortemperaturen zwischen 10 °C und dem Siedepunkt des entstehenden Reaktionsgemisches und einem Druck von 0,8 bis 1,2 bar gasförmig Dichlorsilan entnommen und gewonnen wird, wobei Anteile von Trichlorsilan kondensiert und in den Reaktor zurückgeführt werden und die flüssige Reaktionsphase teilweise dem Reaktor entnommen und in Tetrachlorsilan und in den Reaktor zurückzuführendes Trichlorsilan getrennt wird und als Katalysatormasse auf einem Trägermaterial chemisch gebundenes Alkylamino-trialkoxysilan eingesetzt wird.

2. Verfahren nach Anspruch 1, **dadurch gekennnzeichnet**, daß der Katalysator ein Alkylamino-trialkoxysilan der allgemeinen Formel
(CₓH₂ₓ₊₁O)₃ Si(CH₂)_{z}N(C_{y}H_{2y+1})₂
mit x = 1 bis 4; y = 1 bis 10; z = 1 bis 3 ist.

3. Verfahren nach einem der Ansprüche 1 oder 2, **dadurch gekennzeichnet**, daß das Trägermaterial aus SiO₂-Formkörpern besteht.

4. Trägerkatalysator für die Bildung von SiCl₄ und Dichlorsilan aus Trichlorsilan durch Disproportionierung der eine Katalysatormasse der allgemeinen Formel
(CₓH₂ₓ₊₁O)₃ Si(CH₂)_{z}N(C_{y}H_{2y+1})₂
aufweist, wobei x = 1 bis 4; y = 1 bis 10; z = 1 bis 3 bedeuten.

## Claims

1. Method for the preparation of dichlorosilane by disproportionation of trichlorosilane on a fixed catalyst bed, **characterised in that** gaseous dichlorosilane is removed at reactor temperatures between 10°C and the boiling point of the reaction mixture being produced and at a pressure of 0.8 to 1.2 bar and is recovered, with trichlorosilane contents being condensed and being recycled to the reactor and the liquid reaction phase being recovered partially from the reactor and separated into tetrachlorosilane and into trichlorosilane which is led back to the reactor and alkylamino-trialkoxy silane chemically bound to a support material is employed as catalyst material.

2. Method according to claim 1, **characterised in that** the catalyst is an alkylamino-trialkoxysilane of the general formula
(CₓH₂ₓ₊₁O)₃ Si(CH₂)_{z}N(C_{y}H_{2y+1})₂
with x = 1 to 4; y = 1 to 10; z = 1 to 3.

3. Method according to one of claims 1 or 2, **characterised in that** the support material consists of SiO₂-shaped bodies.

4. Supported catalyst for the formation of SiCl₄ and dichlorosilane from trichlorosilane by disproportionation which has a catalyst material of the general formula
(CₓH₂ₓ₊₁O)₃ Si(CH₂)_{z}N(C_{y}H_{2y+1})₂
wherein x = 1 to 4; y = 1 to 10; z = 1 to 3.

## Revendications

1. Procédé de préparation d'un dichlorosilane par dismutation de trichlorosilane sur un lit fixe de catalyseur, procédé caractérisé en ce que du dichlorosilane gazeux est prélevé et récupéré à des températures de réacteur comprises entre 10°C et le point d'ébullition du mélange réactionnel résultant et sous une pression de 0,8 à 1,2 bar, et des fractions de trichlorosilane sont condensées et reconduites dans le réacteur, et la phase liquide de réaction est partiellement prélevée sur le réacteur et séparée en du tétrachlorosilane et en du trichlorosilane à recycler vers le réacteur, et en ce qu'on utilise, comme masse ou composition de catalyseur, de l'alkylamino-trialcoxysilane chimiquement fixé sur une matière de support.

2. Procédé selon la revendication 1, caractérisé en ce que le catalyseur est un alkylamino-trialcoxy silane de formule générale :
(CₓH₂ₓ₊₁O)₃ Si(CH₂)_{z}N(C_{y}H_{2y+1})₂
dans laquelle x faut 1 à 4; y vaut 1 à 10; z vaut 1 à 3.

3. Procedé selon l'une des revendications 1 ou 2, caractérisé en ce que la matière de support consiste en des corps façonnés ou moulés en SiO₂.

4. Catalyseur sur support pour la formation de SiCl₄ et de dichlorosilane à partir de trichlorosilane, par dismutation, ce catalyseur présentant la masse ou composition de catalyseur de formule générale :
(CₓH₂ₓ₊₁O)₃ Si(CH₂)_{z}N(C_{y}H_{2y+1})₂
dans laquelle x vaut 1 à 4; y vaut à 1 à 10; z vaut 1 à 3.
